# EUROPÄISCHE PATENTSCHRIFT

(11) **EP 0 757 018 B1**
(45) Veröffentlichungstag und Bekanntmachung des Hinweises auf die Patenterteilung: **13.01.1999**
(21) Anmeldenummer: 96250146.6
(22) Anmeldetag: 04.07.1996
(51) Int. Cl.: C03B 5/24, G01J 5/52

(54) **Verfahren zur kontinuierlichen Bestimmung des Redoxzustandes und Wassergehaltes von Glasschmelzen**
Method for continuously monitoring the redox state and the water content of glass melts
Méthode pour la détermination permanente de l'état de l'oxydo-réduction et de la teneur en eau de verre fondu

(30) Priorität: 05.07.1995 DE 19524550
(43) Veröffentlichungstag der Anmeldung: 05.02.1997
(73) Patentinhaber: Hessenkemper, Heiko, Prof. Dr., 09603 Grossschirma (DE)
(72) Erfinder: Hessenkemper, Heiko, Prof. Dr., 09603 Grossschirma (DE)
(74) Vertreter: Pobel, Dieter Dipl.-Chem.

(56) Entgegenhaltungen:
- EP-A- 0 094 907
- US-A- 4 432 657
- GLASTECHNISCHE BERICHTE, Bd. 66, Nr. 10, 1993, Seiten 245-253, XP000195632 R.BRÜCKNER ET AL.: "Influence of water content and basicity on redox ratio"
- NTIS TECH NOTES, Nr. 3G, März 1985, SPRINGFIELD, VA US, Seite 295 XP002018210 R.FRAZER ET AL.: "Continuous Monitoring of Melt Composition"

## Beschreibung

Die Erfindung betrifft ein Verfahren zur kontinuierlichen Bestimmung des Redoxzustandes und Wassergehaltes von Glasschmelzen mittels Temperaturdifferenzmessungen. Die Temperatur der Schmelze wird kontinuierlich durch gleichzeitige Gesamtstahlungsmessungen und strahlungsunabhängige Temperaturmessungen bestimmt.

Ein Verfahren zur Messung von die Oberflächenoxidationsgeschwindigkeit einer Metallschmelze beeinflussenden Elementen ist aus EP-A-94 907 bekannt geworden.

Es ist bekannt, daß in verschiedenen Veröffentlichungen über eine Temperturmessung auch hinsichtlich eines Tiefenprofils durch eine Strahlungsanalyse berichet wird ( J. Am. Ceram. Soc., Vol 44, No. 7, Juli 1961; Seite 321 bis 332, J. Am. Ceram. Soc., Vol. 78 (1995), Seite 897 bis 902). Weiterhin ist bekannt, daß der Redoxzustand einer Glasschmelze von erheblicher technologischer Bedeutung ist. Durch die Strahlungsgesetze ergibt sich in Abhängigkeit des Redoxzustandes im Hochtemperaturbereich ein Einfluß auf die Wärmeübertragung des Glases in der Schmelzwanne, wobei das Maximum des Emmissionsvermögens, nach dem Wien'schen Verschiebungsgesetz, bei 1600 °C etwa bei 1500 nm liegt und desweiteren von der sehr breiten Absorptionsbande des Fe²⁺ bei 1060 nm in silikatischen Schmelzen beeinflußt wird. Die Variation der Wärmeübertragung der Glasschmelze hat Einfluß auf die Temperatur- und Dichtegradienten in der Schmelze, was die Strömungswalzen einer Wanne bestimmt. Weiterhin ist bekannt, daß der Redoxzustand insbesondere im höheren Viskositätsbereich einen erkennbaren Einfluß auf die Viskosität des Glases hat und die Farbe des Glases durch eine Verschiebung des Redoxzustand variiert wird. Für den Wassergehalt des Glases, präziser die gebundenen und ungebundenen OH-Gruppen, sind Einflüsse auf die Viskosität ebenfalls bekannt ebenso wie die sich bis in den Verarbeitungsbereich der Schmelze erstreckenden Einfliisse auf die strahlungsbedingten Wärmetransportmechanismen.

Zur Steuerung des Redoxzustandes und des Wassergehaltes sind ebenfalls eine Vielzahl von Verfahren bekannt, wie beispielsweise Veränderungen des Gemengeversatzes, Einstellung der Ofenatmosphäre und bubbeln mit Wasser oder Wasserdampf. Die technologische Bedeutung der Steuerung des Redoxverhältnisses und des Wassergehaltes der Glasschmelze wird mehr und mehr erkannt, es fehlen zur Zeit geeignete Meßverfahren, um im Produktionsprozeß möglichst frühzeitig zu diesen Meßgrößen für Steuerungszwecke zu gelangen.

Bekannt sind naßchemische und spektroskopische Meßverfahren am erstarrten Glas, die zu Steuerungszwecken allerdings deutlich zu spät Informationen liefern. Die Messung des Sauerstoffpartialdrucks in der Wanne zur Bestimmung des Redoxzustandes ist neben einigen verfahrensbedingten Schwächen bisher nur im Bereich der Arbeitswanne einsetzbar und gibt keinerlei Informationen über die für die Produktion ebenso wichtige Größe des Wassergehaltes der Schmelzen.

In der Veröffentlichung Glastechnische Berichte, Vol. 66, Nr. 10 (1993), Seiten 245-253 wurde gezeigt, daß zwischen dem Wassergehalt und dem Redoxzustand einer Schmelze ein Zusammenhang besteht, desweiteren nicht nur der Bereich der eigenen Absorption bei Konzentrationsänderungen beeinflußt wird, sondern durch eine Veränderung der silikatischen Struktur (Viskositätsänderungen bei konstanter Temperatur) der gesamte spektrale Bereich zwischen 1000 und 3000 nm modifiziert wird. Dies hat erhebliche technologische Auswirkungen beim Glasherstellungsverfahren.

Aufgabe der Erfindung ist es, indirekt über ein Temperaturdifferenzmeßverfahren den Redoxzustand und Wassergehalt der Glasschmelze noch während des Schmelzprozesses zu bestimmen und so eine frühzeitige Steuerung mittels obengenannter Maßnahmen zu ermöglichen.

Veränderungen der beiden Größen sind in einer Veränderung des spektralen Verhaltens der Schmelze erkennbar. Wie in der zitierten Veröffentlichung ( Glastech. Ber., Vol.66, Nr. 10 (1993), Seiten 245-253) gezeigt, ist diese Veränderung nicht nur auf die Eigenabsorption beschränkt, sondern beeinflußt die Lage des Gesamtspektrums des Glases. Damit ist diese spektrale Verändening ein Maß für die Veränderung des Redoxzustandes und des Wassergehaltes und darüber meßbar als Veränderung des Extinktionskoeffizienten insbesondere mittels eines Gesamtstrahlungspyrometers.

Erfindungsgemäß wird nun an geeigneten Stellen, die durch eine Blankschmelze definiert sind, mit einem Pyrometer die scheinbare Glastemperatur gemessen und gleichzeitig und am gleichen Ort mit einer weiteren nicht pyrometrischen Meßmethode ebenfalls eine Temperaturmessung vorgenommen. Bei einer Veränderung des Redoxzustandes und/oder Wassergehaltes der Schmelze wird eine Abweichung der spektroskopischen Eigenschaften die Folge sein, die über eine Veränderung des Extinktionskoeffizienten eine Verändening der pyrometrisch bestimmten Temperatur hervorruft, während die weitere Temperaturmessung , beispielsweise mittels Thermoelement, keine Veränderung zeigen wird oder aus der Veränderung der Strahlungsgleichgewichte eine andere veränderte Temperatur zeigen wird. Die Differenz der beiden Meßwerte ist ein Maß für die spektroskopische Veränderung und damit ein Maß für die Veränderung des Redoxzustandes und Wassergehaltes der Schmelze und läßt sich mittels labonnässiger Eichversuche quantifizieren. Hiennit ist es möglich, direkt den Wassergehalt und Redoxzustand der Schmelzen mittels der obengenannten bekannten Verfahren zu steuern.

In einer weiteren Ausgestaltung der Erfindung wird das Strahlungsgleichgewicht zwischen Oberofen und Schmelze als Temperaturdifferenz bestimmt. Aus der Temperaturmessung der Oberofentemperatur und der pyrometrischen Messung der Glasschmelztemperatur läßt sich mittels eichender Laborversuche der Zusammenhang zwischen dieser Temperaturdifferenz, die durch die spektroskopischen Eigenschaften der Glasschmelze beeinflußt wird, und dem Redoxzustand und Wassergehalt der Schmelze bestimmen und steht als Regelgröße zur Verfügung.

## Patentansprüche

1. Verfahren zur kontinuierlichen Bestimmung des Redoxzustandes und Wassergehaltes von Glasschmelzen, dadurch gekennzeichnet, daß mittels einer Gesamtstrahlungstemperaturmeßmethode in einem bestimmten spektralen Bereich und einer weiteren, strahlungsunabhängigen Temperaturmeßmethode Differenzmessungen in der Glaswanne ausgeführt werden, die durch vorherige Eichversuche den Redoxzustand und Wassergehalt der Glasschmelze quantifizieren.

2. Verfahren zur kontinuierlichen Bestimmung des Redoxzustandes und Wassergehaltes von Glasschmelzen, dadurch gekennzeichnet, daß die Temperaturdifferenz zwischen Schmelze und einer nicht schmelzbedeckten Oberfläche der Ofenkonstniktion mittels einer fortlanfend ausseführten Gesamtstrahlungstemperaturmeßmethode in einem bestimmten spektralen Bereich in der Schmelze und einem anderen fortlanfend ausseführten Temperaturmeßverfahren in der Ofenkonstruktion bestimmt wird und durch Einbeziehung vorherige Eichversuche den Redoxzustand und Wassergehalt der Glasschmelze quantifiziert.

3. Verfahren zur kontinnierlichen Bestimmung des Redoxzurtander und wassergehaltes von Glasschmetzen nach Anspruch 2, dadurch gekennzeichnet, daß die nicht schmelzbedeckte Oberfläche der Ofenkonstniktion die Oberofenkonstruktion über dem Bereich der Blankschmelze ist.

4. Verfahren zur kontinuierlichen Bestimmung des Redoxzustandes und Wassergehaltes von Glasschmelzen nach Anspnich 1 und 2, dadurch gekennzeichnet, daß die Gesamtstrahlungstemperaturmessung pyrometrisch durchgeführt wird.

5. Verfahren zur kontinuierlichen Bestimmung des Redoxzustandes und Wassergehaltes von Glasschmelzen nach Anspruch 1, dadurch gekennzeichnet, daß die strahlungsunabhängige Temperaturmessung mittels Thermoelement durchgeführt wird.

6. Verfahren zur kontinuierlichen Bestimmung des Redoxzustandes und Wassergehaltes von Glasschmelzen nach Anspruch 1 und 2, dadurch gekennzeichnet, daß die gewonnenen Meßgrößen zur Steuerung bekannter Maßnahmen zur Änderung des Redoxzustandes und Wassergehaltes von Glasschmelze verwandt werden.

## Claims

1. Method for continuously monitoring the redox state and the water content of glass melts by means of a total- radiation temperature- measurement method in a certain spectral range and additionally a radiation- dependent temperature-measurement method have been carried out wherein the redox state and water content are quantified through the previous calibration experiments.

2. Method for continuously monitoring the redox state and the water content of glass melts in which the temperature difference between melt and melt- uncovered surface of the furnace construction is determined by means of a continuous total- radiation temperature- measurement method in a certain spectral range in the melt and with another temperature measurement method in the furnace construction wherein the redox state and water content can be quantified through inclusions of the previous calibration experiments.

3. Method of claim 2 wherein the melt- uncovered surface of the furnace construction is over the range of blank- melt.

4. Method of claim 1 and 2 wherein the total- radiation themperature- measurement is carried out pyrometrically.

5. Method of claim 1 wherein the radiation- independent temperature- measurement is carried out by means of thermocouple.

6. Method of claim 1 and 2 wherein the obtained measured values are used for controlling known measure of changing of the redox state and water content.

## Revendications

1. Méthode pour la détermination permanente de l'état de l'oxydo-réduction et de la teneur en eau du verre fondu, caractérisée en ce que les mesures de différences dans le bassin à verre sont effectuées au moyen d'une méthode de mesure de température de rayonnement global dans une zone spectrale déterminée et d'une autre méthode de mesure de température indépendante du rayonnement, lesdites mesures quantifiant l'état de l'oxydo-réduction et la teneur en eau par des essais d'étalonnage préalables.

2. Méthode pour la détermination permanente de l'état de l'oxydo-réduction et de la teneur en eau du verre fondu, caractérisée en ce que la différence de température entre la fonte et une surface du bâti du four non couverte par la fonte est calculée au moyen d'une méthode de mesure de température de rayonnement global exécutée de manière continue dans une zone spectrale déterminée de la fonte et au moyen d'une autre méthode de mesure de température dans le bâti du four, et en ce que l'état de l'oxydo-réduction et la teneur en eau du verre fondu sont quantifiés en faisant intervenir des essais d'étalonnage préalables.

3. Méthode pour la détermination permanente de l'état de l'oxydo-réduction et de la teneur en eau du verre fondu selon revendication 2, caractérisée en ce que la surface du bâti du four non couverte par la fonte est le bâti supérieur du four au-dessus de la zone de fusion à blanc.

4. Méthode pour la détermination permanente de l'état de l'oxydo-réduction et de la teneur en eau du verre fondu selon revendications 1 et 2, caractérisée en ce que la mesure de température de rayonnement global est effectuée par pyrométrie.

5. Méthode pour la détermination permanente de l'état de l'oxydo-réduction et de la teneur en eau du verre fondu selon revendication 1. caractérisée en ce que la mesure de température indépendante du rayonnement est effectuée au moyen d'un thermocouple.

6. Méthode pour la détermination permanente de l'état de l'oxydo-réduction et de la teneur en eau du verre fondu selon revendications 1 et 2, caractérisée en ce que les grandeurs mesurées sont utilisées pour la commande de moyens connus afin de modifier l'état de l'oxydo-réduction et la teneur en eau du verre fondu.
